# EUROPEAN PATENT APPLICATION

(11) **EP 2 990 536 A2**
(43) Date of publication of application: **02.03.2016**
(21) Application number: 15002369.5
(22) Date of filing: 10.08.2015
(51) Int. Cl.: E02F 3/34, E02F 9/08, E02F 9/16

(54) **COMBINATION CAB MOUNTING BRACKET AND LIFT ARM STOP FOR SKID STEER MACHINE**

(30) Priority: 25.08.2014 US 201414467661
(71) Applicant: Caterpillar SARL, 1208 Geneva (CH)
(72) Inventor: Webb, Adrian J., Peoria, Illinois 61629-9510 (US); Mahoney, Jason A., Peoria, Illinois 61629-9510 (US)
(74) Representative: Wagner & Geyer

(57) **Abstract**

A skid steer machine (10) is provided including a frame (14) and a cab (12) supported on the frame. A lift arm assembly (22) includes a pair of lift arms (24, 26) each of which is pivotally supported on the frame (14) at the rear end (32) thereof for movement between a raised position and a lowered position. A pair of combination cab mounting bracket and lift arm stops (38) are provided with each combination cab mounting bracket and lift arm stop (38) being supported on the frame (14) adjacent the forward end (34) of the frame (14) and adjacent a respective lateral side (25, 27) of the frame (14). Each combination cab mounting bracket and lift arm stop (38) includes a cab mount surface (42) and a lift arm stop surface (50) with the lift arm stop surface being arranged outwardly and upwardly relative to the cab mount surface (42).

## Description

### Technical Field

This patent disclosure relates generally to skid steer machines and, more particularly, to a cab mounting bracket and lift arm stop for skid steer machines.

### Background

Skid steer machines are relatively compact, low profile machines that offer high maneuverability and enable operation in relatively small areas. They typically include an operator cab oriented in a position providing a view immediately in front of the skid steer machine. Also typical of skid steer machine designs is the location of the lift arms for carrying and lifting a material handling bucket, also referred to as a loader, or other implement. The lift arms are pivotally coupled to the frame and typically extend longitudinally on both sides of the frame. An operator cage, therefore, may be provided to ensure against an operator inadvertently extending a hand or limb to the side and into the path of the lift arms. Due to the location of the lift arms, the operator enclosure is typically entered from the front of the machine, across the bucket or other implement that is carried by the lift arms.

A pair of hydraulic lift cylinders may be provided for raising and lowering the lift arms. Such lift cylinders may be subject to damage when high impact loads are exerted on them during use. For example, high impact loads can occur if the piston of the lift cylinder bottoms out against the head of the cylinder to stop a bucket that is dropped from its raised position. To help prevent the lift cylinders from bottoming out, some skid steer machines have a separate lift arm stop mounted to each side of the frame so as to engage a respective one of the lift arms when the lift arms are lowered to their lowered positions. Such stops may help prevent the lift cylinders from bottoming out. However, particularly with more compact skid steer machines, it can be difficult to find sufficient space on the frame for such stops along with the various other mounting structures associated with supporting components, such as the operator cage or cab, of the machine.

U.S. Patent No. 5,775,666 discloses an elastic mount that can be used variously as an engine mount, a cab mount, a body mount and a member mount for a motor vehicle. The mount is not disclosed as being usable to stop movement of a lift arm. While the structure of the elastic mount may reduce the number of parts sometimes found with vibration damping devices, it does not address the issues associated with the lack of available space on the frame of compact skid steer machines.

### Summary

In one aspect, the disclosure describes a skid steer machine including a frame having a forward end, a rear end and opposing lateral sides. A cab is supported on the frame. A lift arm assembly includes a pair of lift arms with each lift arm being pivotally supported on the frame at the rear end thereof for movement between a raised position and a lowered position. Each lift arm extending along a respective lateral side of the frame. A pair of combination cab mounting bracket and lift arm stops is provided. Each combination cab mounting bracket and lift arm stop is supported on the frame adjacent the front end of the frame and adjacent a respective lateral side of the frame. Each combination cab mounting bracket and lift arm stop includes a cab mount surface and a lift arm stop surface with the lift arm stop surface being arranged outwardly and upwardly relative to the frame and the cab mount surface. The cab mount surface supports a respective forward portion of the cab and the stop surface is arranged and configured to engage a respective one of the lift arms when it is moved to the lowered position.

In another aspect, the disclosure describes a frame assembly for a skid steer machine having a cab and a lift arm assembly including a pair of lift arms. The frame assembly includes a frame and a pair of lift arm supports each arranged adjacent a rear end of the frame and adjacent a respective lateral side of the frame. Each lift arm support is configured to pivotally support a respective lift arm for movement between a raised position and a lowered position with each lift arm extending along a respective lateral side of the frame. A pair of combination cab mounting bracket and lift arm stops are provided. Each combination cab mounting bracket and lift arm stop is supported on the frame near a front end of the frame and near a respective lateral side of the frame. Each combination cab mounting bracket and lift arm stop includes a cab mount surface and a lift arm stop surface with the lift arm stop surface being arranged outwardly and upwardly relative to the cab mount surface. Each cab mount surface is arranged and configured to support a respective forward portion of the cab and each stop surface is arranged and configured to engage a respective one of the lift arms when the lift arm is moved to the lowered position.

In yet another aspect, the disclosure describes a combination cab mounting bracket and lift arm stop for a skid steer machine having a cab and a lift arm assembly including a pair of lift arms pivotally supported for movement between a raised position and a lowered position with each lift arm extending along a respective lateral side of the frame. The combination cab mounting bracket and lift arm stop includes a mounting bracket portion including a cab mount surface arranged and configured to support a portion of the cab and a lift arm stop portion including a lift arm stop surface with the lift arm stop surface arranged and configured to engage a respective one of the lift arms when it is moved to the lowered position.

### Brief Description of the Drawings

FIG. 1 is a side view of an exemplary skid steer machine according to the present disclosure.
FIG. 2 is an isometric view of the frame and the lift arm assembly of the skid steer machine of FIG. 1.
FIG. 3 is an isometric view of the combination cab mounting bracket and lift arm stop of the frame of FIG. 2.
FIG. 4 is an isometric view of the combination cab mounting bracket and lift arm stop of the frame of FIG. 2.

### Detailed Description

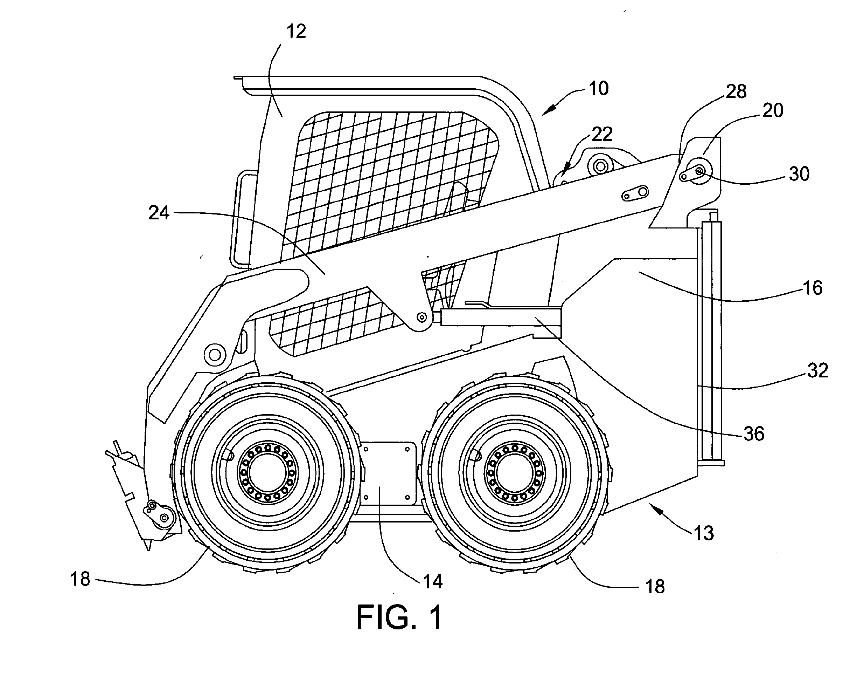

This disclosure generally relates to the mounting and support structures on the frames of skid steer machines. An exemplary embodiment of a skid steer machine 10 according to the present disclosure is shown generally in FIG. 1. The skid steer machine 10, also referred to as a skid steer loader, generally includes an operator cab 12, in this case in the form of a cage, supported on a frame assembly 13 including a frame 14 as described in greater detail below. The frame 14 may also support an engine 16, which in the illustrated embodiment is at a rear end 32 of the frame 14. The skid steer machine 10 may be propelled by a first set of drive wheels 18 on one side of the skid steer machine 10 that are driven independently from a second set of drive wheels on the other side of the skid steer machine 10. Power from the engine 16 may be transmitted to the drive wheels 18 of the skid steer machine 10 in a conventional manner. Alternatively, however, the skid steer machine 10 may have a tracked undercarriage.

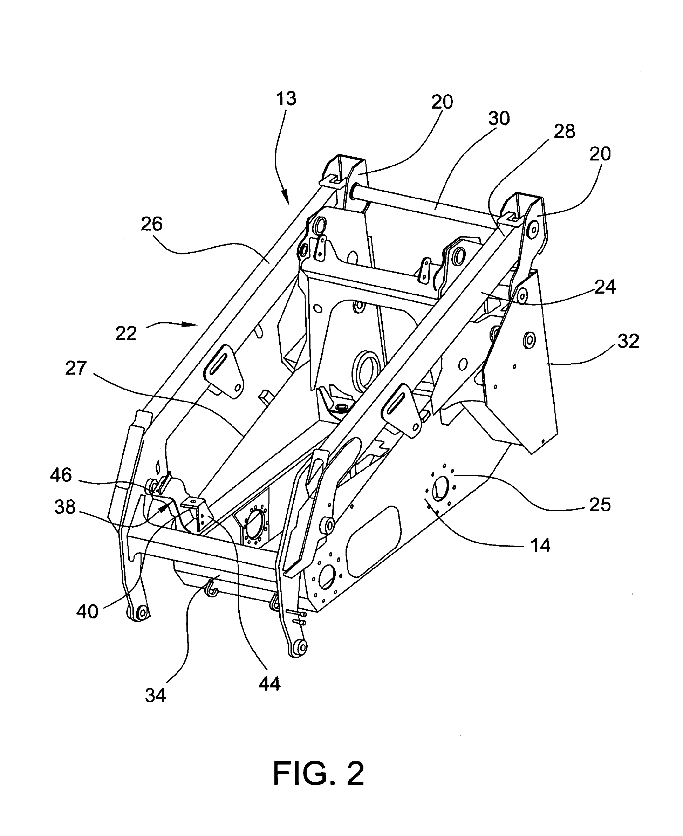

Referring to FIGS. 1 and 2, a pair of laterally spaced upright rear support members 20 may be located at the rear end 32 of the frame 14 for supporting a lift arm assembly 22. As best shown in FIG. 2, the lift arm assembly 22 may include individual first and second lift arms 24, 26, each having a rearward end 28 which is pivotally mounted on a suitable pivot pin 30 to the upper ends of their respective upright rear support members 20. Each of the lift arms 24, 26 may extend forwardly along a respective one of opposing lateral sides 25, 27 of the frame 14 and may have forward distal end portions which extend downwardly at or near the forward end 34 of the frame 14. The forward distal end portions may include a pivotally mounted suitable tool attachment member. The tool attachment member may be used for mounting a bucket or loader, or a variety of other implements or attachments, such as, for example, pallet forks, brooms, grinders, tillers, rakes, blades, or augers onto the lift arms 24, 26. Hydraulic lift cylinders 36 (FIG. 1) are pivotally mounted between each of the lift arms 24, 26 and the frame 14 for raising and lowering the lift arms 24, 26 between respective raised and lowered positions.

To help support the operator cab 12 of the skid steer machine 10 as well as to provide a stop that prevents the lift arms 24, 26 from moving past their lowered positions, the frame assembly 13 may include a combination cab mounting bracket and lift arm stop 38. More particularly, and as shown in FIG. 2, a respective combination cab mounting bracket and lift arm stop 38 may be arranged on each side 25, 27 of the frame 14 near the forward end 34 thereof (only one is visible in FIG. 2 with the second being a mirror image of the illustrated one). Each combination cab mounting bracket and lift arm stop 38 may be connected to the frame 14 in any suitable manner, such as by welding or fasteners. Alternatively, each may be integrally formed with the frame 14.

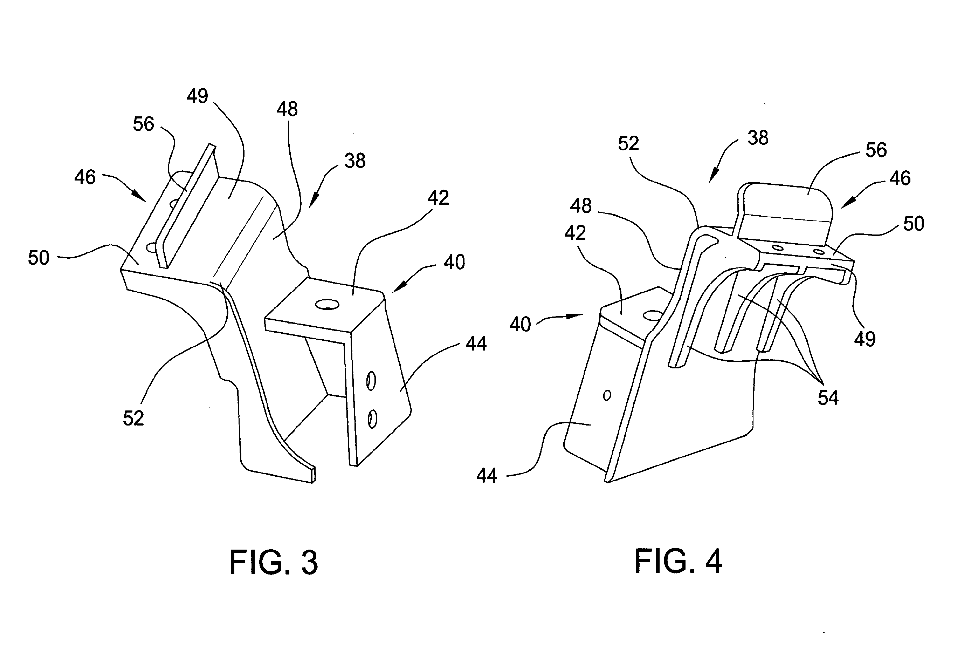

As best shown in FIGS. 3 and 4, each combination cab mounting bracket and lift arm stop 38 may have a mounting bracket portion 40 that includes a cab mount surface 42. In the embodiment shown, the cab mount surface 42 extends in a plane that is generally parallel to a surface over which the skid steer machine 10 is traveling. As shown in FIG. 2, each combination cab mounting bracket and lift arm stop 38 may be arranged with the cab mount surface 42 disposed near the forward end 34 of the frame 14 so as to be positioned to support a respective forward portion of the cab 12. The cab 12 may be bolted or otherwise secured in place on the respective cab mount surfaces 42 of each combination cab mounting bracket and lift arm stop 38. As shown in FIGS. 3 and 4, the cab mount surface 42 of each combination cab mounting bracket and lift arm stop 38 may be supported on an upstanding wall 44 that may be connected at a lower edge thereof to the frame 14 (see FIG. 2). In the illustrated embodiment, and as best shown in FIG. 3, the upstanding support wall 44 extends downwardly from the cab mount surface 42 along a portion of the perimeter thereof. It will be appreciated that differently configured support structures could be used to support the cab mount surface 42 on the frame 14.

Each combination cab mounting bracket and lift arm stop 38 may further include a lift arm stop portion 46 that extends in an outward direction (relative to the frame 14) away from the mounting bracket portion 40. The lift arm stop portion 46 may be integrally formed or connected, such as by welding, with the mounting bracket portion 40. Alternatively, the lift arm stop portion 46 may be securely attached to the mounting bracket portion 40 via any suitable method such as, for example, fasteners. In the illustrated embodiment, and as shown in FIGS. 3 and 4, an upwardly extending wall section 48 extends above the cab mount surface 42 to a plate 49 that is configured to act as a stop surface 50 for a respective one of the lift arms 24, 26. Optionally, and as shown, the wall section 48 may comprise one side of the wall 44 supporting the cab mount surface 42 that extends upward past the cab mount surface 42 and connects via a curved transition portion 52 into the stop surface 50. Support ribs 54 may be provided underneath the plate 49 that includes the stop surface 50. The support ribs 54 may extend across the plate 49, the curved transition portion 52 and the upright wall section 48 to reinforce the stop surface 50 so as enable it to absorb the forces generated by the lift arms 24, 26 when they engage the stop surfaces 50.

The stop surface 50 may have a generally planar configuration and be spaced upward and outward (again, with reference to the frame 14) relative to the cab mount surface 42. Additionally, the stop surface 50 may extend in a plane that is at a slight angle with respect to the cab mount surface 42. More specifically, the stop surface 50 may be angled so that it extends slightly downward as it extends from a rear end towards its front end. This angle may be configured so as to correspond as to the orientation of a respective lift arm 24, 26 when it is in the lowered position. Thus, the stop surface 50 may be disposed and adapted to engage a respective one of the lift arms 24, 26 when the lift arm 24, 26 moves to the lowered position such that the lift arm 24, 26 is prevented from further downward movement beyond the stop surface 50. Additionally, the stop surfaces 50 may be arranged such that the lift arms 24, 26 engage the stop surfaces 50 at substantially the same time.

The lift arm stop portion 46 may include an upright guide wall 56 that extends upward from the stop surface 50. In the embodiment shown, the guide wall 56 is flared slightly inwardly toward the mounting bracket portion 40. The guide wall 56 may be arranged and configured to help prevent lateral movement of the respective lift arm 24, 26 when it is in the lowered positioned and help guide the lift arm 24, 26 into engagement with the stop surface 50 in the event of any lateral misalignment between the two lift arms as they are lowered into the lowered position.

When arranged on the frame 14, each combination cab mounting bracket and lift arm stop 38 may be arranged and configured such that the cab mount surface 42 is arranged inwardly and the stop surface 50 is arranged outwardly relative to each other with respect to the frame 14. Moreover, each combination cab mounting bracket and lift arm stop 38 may be arranged and configured such that the lift arm stop portion 46 extends outwardly of the lateral sides 25, 27 of the frame 14. Each combination cab mounting bracket and lift arm stop 38 also may be arranged and configured with the stop surface 50 arranged relatively higher than the cab mount surface 42.

### Industrial Applicability

The present disclosure finds potential applicability to all types and configurations of skid steer machines. The combination cab mounting bracket and lift arm stop of the present disclosure has particular applicability to skid steer machines with relatively more compact configurations. More specifically, combining the lift arm stop and the cab mount bracket into a single component may allow for the saving of a significant amount of space on the skid steer machine. These space savings can facilitate the design and production of skid steer machines having more compact configurations.

## Claims

1. A combination cab mounting bracket and lift arm stop (38) for a skid steer machine (10) having a cab (12) and a lift arm assembly (22) including a pair of lift arms (24, 26) pivotally supported for movement between a raised position and a lowered position with each lift arm (24, 26) extending along a respective lateral side (25, 27) of the frame (14), the combination cab mounting bracket and lift arm stop (38) comprising:
a mounting bracket portion (40) including a cab mount surface (42) arranged and configured to support a portion of the cab (12); and a lift arm stop portion (46) including a lift arm stop surface (50) with the lift arm stop surface arranged and configured to engage a respective one of the lift arms (24, 26) when it is moved to the lowered position.

2. The combination cab mounting bracket and lift arm stop (38) of claim 1 wherein the stop surface (50) extends at a downward angle relative to the cab mount surface (42).

3. The combination cab mounting bracket and lift arm stop (38) of any of the preceding claims wherein the cab mount surface (42) connects to the stop surface (50) through an upstanding wall portion (46).

4. The combination cab mounting bracket and lift arm stop (38) of any of the preceding claims wherein the stop surface (50) is provided on a plate (49) that includes a plurality of support ribs (54) on an underside thereof.

5. The combination cab mounting bracket and lift arm stop (38) of any of the preceding claims further including a guide wall (56) that extends upward from the stop surface (50).

6. The combination cab mounting bracket and lift arm stop (38) of any of the preceding claims wherein the stop surface (50) is arranged upwardly and outwardly relative to the cab mount surface (42).

7. A frame assembly (13) for a skid steer machine (10) including a pair of combination cab mounting bracket and lift arm stops (38) according to claim 1 with each combination cab mounting bracket and lift arm stop (38) being supported on the frame (14) near a front end (34) of the frame and near a respective lateral side (25, 27) of the frame.

8. A skid steer machine (10) including a frame (14), a cab (12) supported on the frame and a pair of combination cab mounting bracket and lift arm stops (38) according to claim 1 with each combination cab mounting bracket and lift arm stop (38) being supported on the frame (14) near a front end (34) of the frame and near a respective lateral side (25, 27) of the frame.
